# EUROPÄISCHE PATENTSCHRIFT

(11) **EP 0 882 631 B1**
(45) Veröffentlichungstag und Bekanntmachung des Hinweises auf die Patenterteilung: **14.05.2003**
(21) Anmeldenummer: 98105919.9
(22) Anmeldetag: 01.04.1998
(51) Int. Cl.: B60T 8/00

(54) **Verfahren zur Abbremsung eines Fahrzeuges**
Procedure for braking a vehicle
Procédé de freinage d'un véhicule

(30) Priorität: 04.06.1997 DE 19723323
(43) Veröffentlichungstag der Anmeldung: 09.12.1998
(73) Patentinhaber: WABCO GmbH & Co. OHG, 30453 Hannover (DE)
(72) Erfinder: Wolf, Thomas, 30451 Hannover (DE); Breipohl, Hans-Jörg, 30167 Hannover (DE); Pannbacker, Helmut, 30966 Hemmingen (DE)
(74) Vertreter: Schrödter, Manfred, Dipl.-Ing.

(56) Entgegenhaltungen:
- GB-A- 2 307 526
- US-A- 5 421 644

## Beschreibung

Die Erfindung betrifft ein Verfahren zur Abbremsung eines Fahrzeuges, bei dem an wenigstens einer Achse die jeweiligen Bremskräfte an den Rädern dieser Achse durch einen gemeinsamen Bremswert, insbesondere einen gemeinsamen Bremsdruck, beeinflußbar sind, auf Fahrbahnen mit wechselndem Reibwert gemäß dem Oberbegriff des Patentanspruchs 1.

Ein derartiges Verfahren ist aus der DE 44 10 937 C1 bekannt.

Gattungsgemäße Verfahren werden üblicherweise in Verbindung mit druckmittelbetätigbaren und mit einem Antiblockiersystem ausgestatteten Bremsanlagen eingesetzt. Sie können auch in elektrisch gesteuerten Bremsanlagen (EBS) zum Einsatz kommen. Hierbei werden zur Erfassung der Drehgeschwindigkeiten der Fahrzeugräder Sensoren und zur Einstellung der Bremskräfte an den Fahrzeugrädern sogenannte Druckmodulatoren eingesetzt. Mit derartigen Sensoren versehene Fahrzeugräder werden im folgenden auch als sensierte Räder bezeichnet. Als Druckmodulatoren werden z. B. Magnetventile verwendet. Die Bremskräfte werden aufgrund eines im folgenden als Bremswert bezeichneten Signales bestimmt. Als Bremswert kann jede Größe in der Bremsanlage verwendet werden, die die Bremskräfte beeinflußt. In einer konventionellen Bremsanlage wird als Bremswert üblicherweise der von dem Druckmodulator beeinflußte Bremsdruck verwendet. In einer elektrisch gesteuerten Bremsanlage kann auch ein elektrisches Signal als Bremswert verwendet werden.

Bei einer Abbremsung des Fahrzeuges kann ein Blockieren eines oder mehrerer Räder auftreten, was durch das Antiblockiersystem oder die elektrische Bremsanlage verhindert werden soll. Hierfür wertet ein Steuergerät die Drehgeschwindigkeitssignale der sensierten Räder aus und beeinflußt die Bremskräfte an den Rädern mittels des Bremswertes.

Aus Kostengründen werden bei bestimmten Fahrzeugtypen, z. B. bei kleinen Lastkraftwagen, die Räder einer Fahrzeugachse nicht mit jeweils einem Druckmodulator versehen, sondern es werden alle Räder einer Achse mit einem einzigen Druckmodulator gesteuert. Wenn ein derartiges Fahrzeug auf einer Fahrbahn abgebremst wird, auf der die Reibwerte (teilweise in der Literatur auch als Kraftschlußbeiwerte bezeichnet) an den beiden Fährzeugseiten unterschiedlich sind, tritt das Problem auf, daß die Räder an den beiden Fahrzeugseiten für eine jeweils optimale Reibwertausnutzung jeweils individuell mit Bremskräften beaufschlagt werden müßten, was aber an der Fahrzeugachse, die nur einen Druckmodulator aufweist, nicht möglich ist. An dieser Fahrzeugachse können die Bremskräfte nur gemeinsam über einen einzigen Bremswert eingestellt werden, für dessen Ermittlung ein geeignetes Regelungsprinzip notwendig ist.

Es ist bekannt, die Drehgeschwindigkeitssignale der Räder dieser Achse bzw. die daraus abgeleiteten Regelsignale zu einer einzigen Führungsgröße zu verknüpfen und eine Bremswertbestimmung aufgrund dieser Führungsgröße vorzunehmen. Ein übliches Verfahren besteht darin, als Führungsgröße jeweils die Signale des auf dem geringeren Reibwert befindlichen Rades (Low-Rad) zu verwenden (Select-Low-Regelung). Hierbei wird die auf die Fahrbahn maximal übertragbare Bremskraft des auf dem höheren Reibwert befindliche Rades (High-Rad) nicht ausgenutzt, so daß sich ein relativ langer Bremsweg ergibt.

Im umgekehrten Fall ist es ebenfalls denkbar, die Signale des auf dem höheren Reibwert befindlichen Rades als Führungsgröße zu verwenden (Select-High-Regelung). Hierdurch wird ein relativ kurzer Bremsweg erreicht, wobei allerdings das auf dem geringeren Reibwert befindliche Rad blockiert. Hierbei besteht die Gefahr, daß an dem blockierenden Rad der Reifen beschädigt werden kann, insbesondere wenn der geringere Reibwert während der Blockierphase wieder ansteigt.

Bei dem eingangs genannten bekannten Verfahren zur Abbremsung eines Fahrzeuges wird vorgeschlagen, bei einer Abbremsung auf einer Fahrbahn mit unterschiedlichen Reibwerten an den beiden Fahrzeugseiten den Bremsdruck zunächst schnell auf einen ersten Wert und danach langsam bis zu einem Druckgrenzwert zu erhöhen und daraufhin eine Select-High-Regelung durchzuführen. Durch den langsamen Anstieg des Bremsdruckes soll ein langsamer Anstieg des Giermomentes bzw. von Lenkkräften bewirkt werden. Die Select-High-Regelung, bei der das auf dem geringeren Reibwert befindliche Rad dauerhaft blockiert, wird dort bis zum Stillstand des Fahrzeuges bzw. zum Abbruch der Bremsung beibehalten.

Das zuvor beschriebene Regelungskonzept hat den Nachteil, daß bei einem Anstieg des zunächst geringen Reibwertes auf einen höheren Wert während der Select-High-Regelung das blockierte Rad in vielen Fällen nicht wieder anläuft und hierdurch der Reifen beschädigt wird. Da das Rad dauerhaft blockiert, ist es außerdem nicht möglich, aufgrund seines Drehgeschwindigkeitssignales derartige Reibwertänderungen zu erkennen.

Aus der US 5,421,644 ist ein weiteres gattungsgemäßes Verfahren bekannt, bei dem im Rahmen einer Select-High-Regelung das auf dem geringeren Reibwert befindliche Rad zum Blockieren gebracht wird. Im Rahmen der nach dem Select-High-Prinzip ablaufenden ABS-Regelung erfolgen, ausgelöst durch Fahrbahnbedingungen, ABS-Regelzyklen, bei denen die Bremskräfte zumindest zeitweilig verringert werden. Diese Phasen der Bremskraftverringerung sind jedoch von zufälligen, äußeren Bedingungen abhängig und ermöglichen keine sichere Erkennung eines Reibwertanstiegs an dem während der Select-High-Regelung blockierten Rad. Hierdurch sind Beschädigungen an diesem Rad bzw. dessen Reifen möglich.

Der Erfindung liegt deshalb die Aufgabe zugrunde, ein Verfahren zur Abbremsung eines Fahrzeuges, bei dem an wenigstens einer Achse die jeweiligen Bremskräfte an den Rädern dieser Achse durch einen gemeinsamen Bremswert beeinflußbar sind, auf Fahrbahnen mit wechselnden Reibwerten anzugeben, durch das ein kurzer Bremsweg erzielt wird und bei dem Reibwertänderungen, insbesondere an einem zunächst auf einem geringen Reibwert befindlichen Rad, jederzeit erkannt werden können.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Als Bremswert wird in den folgenden Ausführungen jede Größe in einer Bremsanlage verstanden, durch die die Bremskräfte an den Fahrzeugrädern beeinflußbar sind.

Der Schlupf eines mit Bremskraft beaufschlagten Rades ist als Differenz zwischen der Fahrzeuggeschwindigkeit und der Drehgeschwindigkeit dieses Rades definiert. Als relativer Schlupf wird der prozentuale Anteil des zuvor beschriebenen Schlupfes an der Fahrzeuggeschwindigkeit verstanden.

Als Blockieren eines Rades wird ein Zustand verstanden, bei dem der relative Schlupf wenigstens annähernd einen Wert von 100% erreicht. Bei kleineren Schlupfwerten liegt lediglich eine Blockierneigung vor.

Ein Vorteil der Erfindung besteht darin, daß bei einer Abbremsung auf einer Fahrbahn mit unterschiedlichen Reibwerten an den beiden Fahrzeugseiten auch eine geringfügige Erhöhung des geringeren der beiden Reibwerte schnell erkannt wird. Infolge dessen kann auch schnell entschieden werden, ob eine Fortsetzung des hierbei verwendeten Regelungsprinzips, bei dem das auf dem geringeren Reibwert befindliche Rad wenigstens zeitweise blockiert, zulässig ist, oder ob aufgrund von zu erwartenden Reifenbeschädigungen mit einem anderen Regelungsprinzip fortgefahren werden muß, bei dem das Blockieren des Rades vermieden wird.

Eine derartige Maßnahme beruht auf der Erkenntnis, daß ein blockiertes Rad nur einen relativ geringen Anteil des aufgrund der Fahrbahnverhältnisse verfügbaren Reibwertes ausnutzt. Da das Blockieren eines Rades dann auftritt, wenn die von der Bremseinrichtung auf das Rad einwirkende Bremskraft die jeweilige Reibkraft, die von dem ausgenutzten Reibwertanteil hervorgerufen wird, für eine gewisse Mindestzeit überschreitet, kann in entsprechender Weise der Zustand des Blockierens nur beendet werden, wenn der in diesem Zustand ausgenutzte Reibwertanteil eine Reibkraft hervorrufen kann, die die Bremskraft überschreitet.

Die zuvor genannte Bedingung kann im Grundsatz bereits dadurch erfüllt werden, daß das blockierte Rad auf einen Fahrbahnabschnitt gelangt, auf dem der verfügbare Reibwert erheblich höher ist, so daß trotz der geringen Reibwertausnutzung beim Blockieren eine ausreichend hohe Reibkraft entsteht. In diesem Fall läuft das Rad ohne zusätzliche Maßnahmen wieder an. Eine erkennbare Beschädigung des Reifens tritt nicht auf.

In vielen Fällen wird jedoch der verfügbare Reibwert nicht sprunghaft auf einen erheblich größeren Wert ansteigen, sondern entweder langsam zunehmen oder nur geringfügig ansteigen, so daß die von dem ausgenutzten Reibwert dann erzeugte Reibkraft noch nicht für eine Überschreitung der Bremskraft ausreicht. Hierbei kann es bereits zu einer Beschädigung des Reifens kommen.

Durch die erfindungsgemäße Verringerung der Bremskräfte in bestimmten Zeitintervallen, ausgelöst von einer Zeitüberwachungsfunktion, kann jedoch die Bedingung für eine Beendung des Radblockierens während der Zeitintervalle erfüllt werden, so daß auch bei einer geringen Erhöhung des verfügbaren Reibwertes das Rad nach
kurzer Zeit wieder anlaufen kann und gegebenenfalls mit einem anderen Regelungsprinzip fortgefahren werden kann. Auf diese Weise können Beschädigungen der Reifen vermieden werden.

Gemäß.einer vorteilhaften Weiterbildung der Erfindung ist neben dem für Fahrbahnen mit stark unterschiedlichen Reibwerten vorgesehenen ersten Regelungsprinzip, bei der ein Rad blockieren kann, noch ein zweites Regelungsprinzip vorgesehen, das vorzugsweise auf Fahrbahnen mit seitenweise nahezu gleichen oder nur gering voneinander abweichenden Reibwerten verwendet wird, und bei dem keines der Räder blockiert. Hierdurch wird die Seitenführungskraft der Räder erhöht und somit die Fahrstabilität des Fahrzeuges beim Abbremsen in einer Kurve verbessert. Auf diese Weise kann eine besonders flexible Art der Bremskraftsteuerung bei vielen in der Praxis auftretenden Reibwertkombinationen erreicht werden.

Ein weiterer Vorteil besteht darin, daß das erste Regelungsprinzip bei einer Erhöhung des geringeren Reibwertes nicht generell abgebrochen wird, sondern daß in Abhängigkeit von der Größe der Erhöhung, die aus den Drehgeschwindigkeitssignalen jeweils nach einer erfindungsgemäßen Bremskräfteverringerung abgeleitet werden kann, entschieden wird, nach welchem Regelungsprinzip unter Berücksichtigung von möglichen Reifenbeschädigungen und dem Bremsweg fortgefahren werden muß. Hierdurch wird ein besonders hoher Grad an Sicherheit erreicht.

Gemäß einer vorteilhaften Weiterbildung wird die Erfindung als Teil eines übergeordneten Regelungskonzeptes eingesetzt, bei dem verschiedene einzelne Regelungsprinzipien für unterschiedliche Fahrbahnbedingungen vorgesehen sind. Für die Auswahl des jeweils erforderlichen Regelungsprinzips ist eine Beurteilung des Unterschiedes zwischen den Reibwerten an den Fahrzeugseiten vorgesehen. Hierfür werden die Drehgeschwindigkeitssignale während der Abbremsung mittels zeitlicher Integration ausgewertet und aus der Differenz der Zeitintegrale ein µ-split-Wert bestimmt, der den Unterschied zwischen den Reibwerten angibt. Ein geeignetes Verfahren hierfür ist in dem eingangs genannten Stand der Technik näher beschrieben.

Neben den bereits genannten Regelungsprinzipien kann noch ein weiteres Regelungsprinzip vorgesehen sein, das vorzugsweise auf Fahrbahnen mit seitenweise nahezu gleichen oder nur gering voneinander abweichenden Reibwerten verwendet wird und bei dem keines der Räder blockiert. Das weitere Regelungsprinzip kann mit dem zweiten Regelungsprinzip identisch sein.

Eine besonders vorteilhafte Ausgestaltung der Erfindung weist daher folgende Merkmale auf:

Es werden die Drehgeschwindigkeiten an wenigstens zwei sensierten Rädern der Achse, die an unterschiedlichen Seiten des Fahrzeuges angeordnet sind, als Drehgeschwindigkeitssignale gemessen;
durch Auswertung des Verlaufes der Drehgeschwindigkeitssignale wird geprüft, ob bei einer Abbremsung des Fahrzeuges eine Blockierneigung an den sensierten Rädern vorliegt;
durch Auswertung des Verlaufes der Drehgeschwindigkeitssignale wird bei einer Abbremsung des Fahrzeuges als µ-split-Wert ein Unterschied zwischen den Reibwerten, die zwischen der Fahrbahn und den sensierten Rädern vorliegen, bestimmt, sofern keines der sensierten Räder blockiert;
wenn eine Blockierneigung an den sensierten Rädern festgestellt wurde und der µ-split-Wert einen festgelegten Grenzwert nicht überschreitet, wird der Bremswert derart beeinflußt, daß bei möglichst hohen Bremskräften keines der sensierten Räder blockiert;
wenn eine Blockierneigung an den sensierten Rädern festgestellt wurde und außerdem der µ-split-Wert den festgelegten Grenzwert überschreitet, wird im Rahmen des ersten Regelungsprinzips der Bremswert derart beeinflußt, daß nur das auf dem geringeren Reibwert befindliche Rad wenigstens zeitweise blockiert;
während des ersten Regelungsprinzips werden durch Beeinflussung des Bremswertes während bestimmter Zeitintervalle die Bremskräfte kurzzeitig soweit verringert, daß das auf dem geringeren Reibwert befindliche Rad im Falle einer zwischenzeitlich eingetretenen Erhöhung des Reibwertes aus dem blockierten Zustand wieder anlaufen kann;
wenn das Drehgeschwindigkeitssignal des auf dem geringeren Reibwert befindlichen Rades, insbesondere infolge der Bremskräfteverringerung, sich wenigstens annähernd bis zum Drehgeschwindigkeitssignal des auf dem höheren Reibwert befindlichen Rades erhöht, wird das erste Regelungsprinzip beendet und der Bremswert wiederum derart beeinflußt, daß bei möglichst hohen Bremskräften keines der sensierten Räder blockiert;
wenn das Drehgeschwindigkeitssignal des auf dem geringeren Reibwert befindlichen Rades sich nicht annähernd bis zum Drehgeschwindigkeitssignal des auf dem höheren Reibwert befindlichen Rades erhöht, wird im Rahmen des ersten Regelungsprinzips der Bremswert wiederum derart beeinflußt, daß nur das auf dem geringeren Reibwert befindliche Rad wenigstens zeitweise blockiert.

Hierdurch kann auf Fahrbahnen mit wechselnden Reibwerten ein kurzer Bremsweg erzielt wird, ohne daß die Reifen des Fahrzeuges infolge Blockierens beschädigt werden.

Die Erfindung wird in vorteilhafter Weise in solchen Bremsanlagen eingesetzt, in denen eine Erhöhung des Bremswertes eine Erhöhung der Bremskräfte bewirkt und eine Verringerung des Bremswertes eine Verringerung der Bremskräfte bewirkt. Hierbei kann beispielsweise ein proportionaler Zusammenhang zwischen den Größen Bremswert und Bremskraft bestehen. Die Erfindung ist jedoch nicht auf derartige Anwendungsfälle beschränkt.

In einer vorteilhaften Weiterbildung der Erfindung wird als zweites und/oder weiteres Regelungsprinzip das Prinzip der Select-Low-Regelung angewandt. Dies hat den Vorteil, daß in diesem Zeitraum eine Regelung sehr einfach und mit geringem Aufwand realisiert werden kann.

In einer weiteren vorteilhaften Weiterbildung der Erfindung wird als zweites und/oder weiteres Regelungsprinzip das Prinzip der modifizierten Achsregelung gemäß der DE 37 33 801 A1 angewandt. Hierdurch wird bei nur geringfügig erhöhtem Aufwand gegenüber dem Select-Low-Prinzip ein kürzerer Bremsweg erzielt.

In einer vorteilhaften Weiterbildung der Erfindung werden im Rahmen des ersten Regelungsprinzips außerhalb der Zeitintervalle, in denen die Bremskräfte kurzzeitig verringert werden, die Bremskräfte durch Beeinflussung des Bremswertes soweit erhöht, daß das auf dem höheren Reibwert befindliche Rad eine Blockierneigung aufweist. Hierdurch kann ein möglichst kurzer Bremsweg erzielt werden, da der vorhandene (höhere) Reibwert möglichst gut ausgenutzt wird. Da während des ersten Regelungsprinzips die Bremskräfte in bestimmten Zeitintervallen kurzzeitig verringert werden, werden außerhalb der Zeitintervalle zwecks einer möglichst guten Reibwertausnutzung die Bremskräfte durch adaptive Beeinflussung des Bremswertes an den jeweils erforderlichen Wert angepaßt. Hierbei können die Bremskräfte gleichmäßig oder stufenweise erhöht werden, bis eine Blockierneigung an dem auf dem höheren Reibwert befindlichen Rad erkennbar wird.

Zur Erkennung der Blockierneigung können beispielsweise im Sinne des Select-High-Prinzips die entsprechenden, von herkömmlichen Antiblockiersystemen her bekannten Regelsignale, nämlich negative Beschleunigungssignale (-b) und/oder Schlupfsignale (λ), die aus den Drehgeschwindigkeitssignalen der Räder abgeleitet sind, verwendet werden. Gemäß einer vorteilhaften Weiterbildung werden hierbei abweichend von dem Select-High-Prinzip zusätzlich noch von dem auf dem geringeren Reibwert befindlichen Rad positive Beschleunigungssignale (+b) als Regelsignale für die Einstellung des jeweils erforderlichen Bremswertes berücksichtigt. Die Berücksichtigung erfolgt nach Art bekannter Regelungsverfahren in Antiblockiersystemen (z. B. DE 37 33 801 A1).

Eine weitere, besonders vorteilhafte Möglichkeit, während des ersten Regelungsprinzips eine Blockierneigung zu erkennen, besteht darin, zunächst den Mittelwert der Drehgeschwindigkeitssignale zu berechnen und diesen dann auf Unterschreitung eines Schwellenwertes hin zu überwachen. Da während des ersten Regelungsprinzips das auf dem geringeren Reibwert befindliche Rad in den zu überwachenden Phasen blockiert, liefert es somit keinen Beitrag zu dem Mittelwert. Der Mittelwert ist daher im wesentlichen proportional zu dem Drehgeschwindigkeitssignal des auf dem höheren Reibwert befindlichen Rades. Hierdurch ist eine sehr einfache und zuverlässige Erkennung der Blockierneigung möglich. Außerdem kann an dem auf dem höheren Reibwert befindlichen Rad, bei dem mittels des ersten Regelungsprinzips der verfügbare Reibwert möglichst gut ausgenutzt werden soll, eine Regelung mit besonders kleinen Amplituden der Regelschwingungen erzielt werden. Hierdurch wird ein guter Regelungskomfort und eine besonders hohe Reibwertausnutzung erzielt.

Gemäß einer weiteren vorteilhaften Weiterbildung wird der zuvor erwähnte Schwellenwert verringert, wenn die Fahrzeugverzögerung einen sehr hohen oder einen sehr geringen Wert aufweist. Hierdurch wird auf Fahrbahnabschnitten mit geringen Reibwerten, auf denen nur eine geringe Fahrzeugverzögerung erzielt werden kann, die Fahrstabilität erhöht. Auf Fahrbahnabschnitten mit hohen Reibwerten, auf denen eine hohe Fahrzeugverzögerung erzielt werden kann, wird hierdurch der Reifenverschleiß vermindert, ohne daß der Bremsweg erheblich vergrößert wird.

In einer weiteren vorteilhaften Weiterbildung wird der Bremswert beim Übergang zu dem ersten Regelungsprinzip nach einer Zeitfunktion stetig oder feinstufig verändert. Durch die Wahl einer geeigneten Zeitfunktion kann ein gleichmäßiger, langsamer Übergang zwischen den Regelungsarten erreicht werden. Hierdurch kann ein plötzlicher Anstieg des Giermomentes und der Lenkkräfte vermieden werden und somit auch ein für den Fahrer überraschendes Fahrverhalten des Fahrzeuges vermieden werden.

Gemäß einer weiteren vorteilhaften Weiterbildung der Erfindung erfolgt ein Übergang zu dem ersten Regelungsprinzip nur bei solchen Fahrzeugverzögerungen, die unterhalb eines festgelegten Grenzwertes liegen. Da relativ hohe Fahrzeugverzögerungen auch bei Reibwertunterschieden an den beiden Fahrzeugseiten ein Anzeichen dafür sind, daß sogar der geringere Reibwert eine Größe aufweist, bei der beim Blockieren eines Rades mit Reifenschäden zu rechnen ist, wird in solchen Fällen das erste Regelungsprinzip nicht angewandt und stattdessen mit dem bis dahin angewandten Regelungsprinzip fortgefahren. Hierbei wird ebenfalls eine ausreichende Fahrzeugverzögerung erreicht, wobei Reifenschäden vermieden werden.

In einer vorteilhaften Weiterbildung der Erfindung wird während des ersten Regelungsprinzips nach einem Zeitintervall, in dem die Bremskräfte durch Beeinflussung des Bremswertes kurzzeitig verringert wurden, der vor dem Zeitintervall vorliegende Bremswert wenigstens annähernd wieder eingestellt. Hierdurch kann nach der Bremskräfteverringerung sehr schnell wieder die erforderliche Bremskraft hergestellt werden und somit ein kurzer Bremsweg erzielt werden. Bei Verwendung der Erfindung an einer lenkbaren Fahrzeugachse werden durch diese Weiterbildung außerdem unkomfortable Stöße in der Lenkung weitestgehend vermieden.

Die Erfindung wird anhand eines Ausführungsbeispieles unter Zuhilfenahme von Zeichnungen näher erläutert.

Es zeigen
- Fig. 1: die die Erfindung betreffenden Teile einer Fahrzeugbremsanlage und
- Fig. 2: den zeitlichen Verlauf verschiedener Signale innerhalb der Bremsanlage bei einer Abbremsung des Fahrzeuges.

In den Figuren werden gleiche Bezugszeichen für einander entsprechende Teile und Signale verwendet.

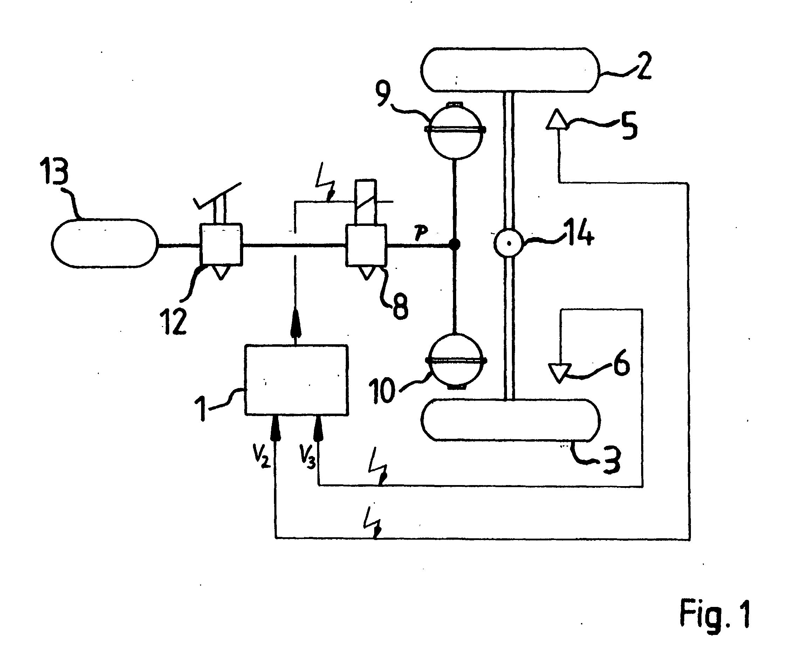

In der Fig. 1 sind die die Erfindung betreffenden Teile einer Fahrzeugbremsanlage dargestellt. Es ist eine Fahrzeugachse (14) vorhanden, an der zwei Räder (2, 3) befestigt sind. Die Räder sind mit nicht dargestellten Reifen versehen, die den Kontakt des Fahrzeuges zu der Fahrbahn herstellen. Den Rädern (2, 3) sind zur Abbremsung jeweils eine Bremseinrichtung (9, 10) zugeordnet, mittels derer die Räder mit Bremskräften beaufschlagt werden können. Die Bremseinrichtungen (9, 10) können in üblicher Weise als druckmittelbetätigbare Trommel- oder Scheibenbremsen ausgebildet sein. Zur Betätigung können die Bremseinrichtungen (9, 10) über die Ventile (8, 12) mit einem Druckmittel beaufschlagt werden, das aus einem Druckmittelvorratsbehälter (13) entnommen wird. Weitere für den Betrieb einer derartigen druckmittelbetriebenen Bremsanlage erforderliche Komponenten, wie z. B. ein Kompressor zum Befüllen des Druckmittelvorratsbehälters (13), sind in der Fig. 1 nicht dargestellt.

Die Druckmittelbeaufschlagung der Bremseinrichtungen (9, 10) kann einerseits von dem Fahrer durch Betätigung des Fußbremsventils (12) gesteuert werden. Andererseits kann der durch das Fußbremsventil (12) vorgegebene Bremsdruck noch durch das mit dem Fußbremsventil (12) in Reihe geschaltete Magnetventil (8) beeinflußt werden.

Als Bremswert wird in diesem Ausführungsbeispiel der Ausgangsdruck (P) des Magnetventils (8) verwendet. Das Magnetventil (8) dient hierbei als Bremsdruckmodulator. Es ist dazu geeignet, den an seinem Eingangsanschluß vorliegenden Druck, der von dem Fußbremsventil (12) abgegeben wird, auf verringertem oder höchstens gleich hohem Niveau an seinen Ausgangsanschluß bzw. an die Bremseinrichtungen (9, 10) weiterzugeben. Das Magnetventil (8) kann in üblicher Weise als 3/2-Wegeventil ausgebildet sein.

Das Magnetventil (8) wird durch ein elektrisches Signal betätigt, das von einem elektronischen Steuergerät (1) erzeugt wird. Das elektrische Signal kann ein einfaches Ein-/Aus-Signal sein. Es kann sich allerdings auch um ein serielles Datensignal handeln, sofern das Magnetventil (8) über eine entsprechende Auswertemöglichkeit für ein derartiges Signal verfügt.

In dem Steuergerät (1) ist ein Mikroprozessor zur Ausführung des erfindungsgemäßen Verfahrens vorgesehen. Das erfindungsgemäße Verfahren ist dann als Teil des Steuerprogramms für den Mikroprozessor ausgebildet. Die zur Ausführung des Verfahrens notwendigen Drehgeschwindigkeitssignale der Räder (2, 3) werden dem Steuergerät (1) als Eingangssignale zugeführt, die mittels Drehgeschwindigkeitssensoren (5, 6) ermittelt werden. Des weiteren kann auch noch ein in der Fig. 1 nicht dargestellter Drucksensor zur Sensierung des von dem Magnetventil (8) ausgegebenen Druckes (P) vorhanden sein, dessen Signal dann ebenfalls dem Steuergerät (1) als Eingangssignal zugeführt wird.

Wenn z. B. aus Kostengründen kein Drucksensor verwendet wird, dann wird in dem Steuergerät die Zuordnung zwischen dem elektrischen Signal zur Betätigung des Magnetventils (8) und dem gewünschten Druck (P) rechnerisch z. B. durch Verwendung von in dem Steuergerät gespeicherten Datentabellen vorgenommen. Die Datentabellen sind dann fahrzeugspezifisch durch Versuche zu ermitteln.

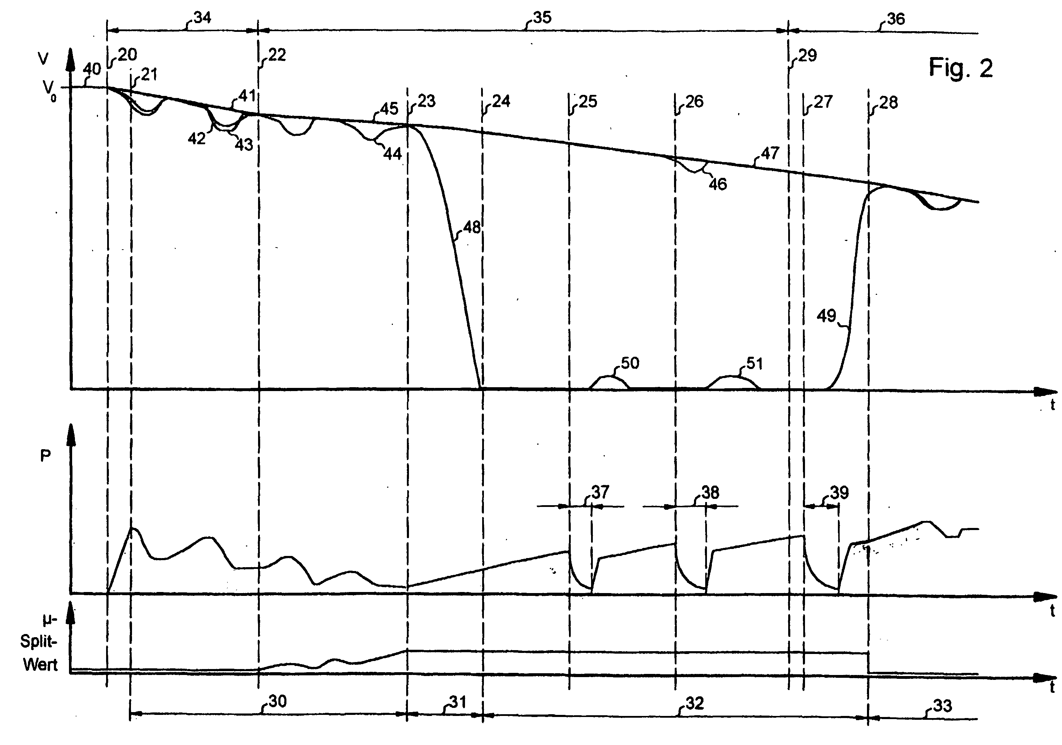

Mittels der Fig. 2 soll im folgenden anhand eines typischen Verlaufs der in dem Steuergerät verwendeten Signale das erfindungsgemäße Verfahren zur Abbremsung näher erläutert werden.

In der Darstellung gemäß Fig. 2 sind die physikalisch unterschiedlichen Größen in jeweils eigenen Diagrammen aufgetragen, die zeitlich miteinander in Korrelation stehen. Die Geschwindigkeitssignale (V₂, V₃) der Räder (2, 3) sowie die Fahrzeuggeschwindigkeit sind in einem Diagramm dargestellt. Hierbei können diese Signale zeitweise den gleichen Wert aufweisen, so daß dann nicht drei voneinander getrennte Kurvenverläufe sichtbar sind. Bei Abweichungen zwischen diesen Signalen sind den jeweiligen Kurvenverläufen Bezugszeichen zugeordnet, sofern dies für das Verständnis der Erfindung erforderlich ist. Für den Verlauf des Druckes (P) und des nur intern in dem Steuergerät vorhandenen µ-split-Wertes enthält die Fig. 2 jeweils eigene Diagramme.

Es wird zunächst von einem fiktiven Anfangszustand ausgegangen, bei dem das Fahrzeug bereits mit einer Anfangsgeschwindigkeit (V₀) fährt und zu einem Zeitpunkt (20) abgebremst wird. Hierbei wird zunächst eine annähernd homogene Verteilung der Reibwerte angenommen, die bis zum Zeitpunkt (22) vorliegt. Von diesem Zeitpunkt an wird ein größerer Reibwertunterschied an den beiden Fahrzeugseiten angenommen. Es ist jedoch auch denkbar, daß eine Abbremsung bereits auf einem Fahrbahnabschnitt mit unterschiedlichen Reibwerten beginnt. In diesem Fall ist der Ablauf des erfindungsgemäßen Verfahrens analog zu der Darstellung in der Fig. 2, wobei die Phase (34) zwischen den Zeitpunkten (21, 22) dann fehlt.

Vor dem Zeitpunkt (20) bewegt sich das Fahrzeug mit der Anfangsgeschwindigkeit (V₀). Das Fahrzeug wird hierbei weder beschleunigt noch abgebremst, so daß die Fahrzeuggeschwindigkeit und die Drehgeschwindigkeitssignale (V₂, V₃) den gleichen Wert aufweisen, der durch die Linie (40) angegeben wird. Zum Zeitpunkt (20) wird vom Fahrer des Fahrzeuges durch Betätigung des Fußbremsventils (12) die Abbremsung des Fahrzeuges eingeleitet. Der Bremsdruck (P) steigt daraufhin mit einem fahrzeugspezifischen Gradienten mit der Zeit an. Hierbei verringern sich die Drehgeschwindigkeiten der Räder (2, 3) schneller als die Fahrzeuggeschwindigkeit, und es entsteht ein Bremsschlupf. Die Drehgeschwindigkeitssignale (V₂, V₃) werden fortlaufend in dem Steuergerät (1) ausgewertet. Zum Zeitpunkt (21) wird dann aufgrund des Verlaufes der Drehgeschwindigkeiten (V₂, V₃) eine Blockierneigung an den sensierten Rädern festgestellt, indem der Bremsschlupf oder ein daraus abgeleiteter Verzögerungswert eine vorgegebene Schwelle überschreitet. Infolgedessen wird der Bremsdruck (P) im Rahmen einer modifizierten Achsregelung gemäß der DE 37 33 801 A1 beeinflußt.

Hierbei gibt das Steuergerät (1) elektrische Signale an das Magnetventil (8) derart ab, daß bei möglichst hohen Bremskräften keines der Räder blockiert. Es entsteht der in der Phase (34) dargestellte Verlauf des Bremsdruckes (P). Da in der Phase (34) eine annähernd gleichmäßige Reibwertverteilung an den beiden Fahrzeugseiten angenommen wird, sind die Geschwindigkeitsverläufe (42, 43) der sensierten Räder in dieser Phase auch annähernd gleich. Die Fahrzeuggeschwindigkeit verringert sich in dieser Phase gemäß dem Kurvenverlauf (41).

Zu dem Zeitpunkt (22) wird angenommen, daß sich der verfügbare Reibwert an einer Seite des Fahrzeuges erheblich verringert, während der verfügbare Reibwert an der anderen Fahrzeugseite dem zuvor angenommenen Wert entspricht. Diese Reibwertverteilung liegt während der gesamten Phase (35) vor, das heißt bis zum Zeitpunkt (29). Nach dem Zeitpunkt (22) wird zunächst mit der modifizierten Achsregelung fortgefahren. Aufgrund der geänderten Reibwertverhältnisse befindet sich das Drehgeschwindigkeitssignal (V₂) des in diesem Fall auf dem höheren Reibwert befindlichen Rades (2) auf demselben Niveau wie die Fahrzeuggeschwindigkeit. Dies ist durch die Linie (45) dargestellt. Das auf dem geringeren Reibwert befindliche Rad (3) weist weiterhin Bremsschlupf gemäß der Linie (44) auf. Der Verlauf des Bremsdruckes (P) wird zwischen den Zeitpunkten (22, 23) im wesentlichen von diesem Drehgeschwindigkeitssignal (V₃) beeinflußt.

Durch Beurteilung des Verlaufes der Drehgeschwindigkeitssignale (V₂, V₃) wird in dieser Phase ein µ-split-Wert ermittelt, der dann zu dem Zeitpunkt (23) einen festgelegten Grenzwert überschreitet. Infolgedessen wird abweichend von der in der Phase (30) vorliegenden modifizierten Achsregelung nun der Übergang zu dem ersten Regelungsprinzip eingeleitet. Dieser Übergang wird in der Phase (31) durch eine gleichmäßige Erhöhung des Bremsdruckes (P) nach einer vorgegebenen Zeitfunktion durchgeführt. Durch diese Erhöhung des Bremsdruckes (P) verringert sich das Drehgeschwindigkeitssignal (V₃) gemäß der Linie (48) so weit, bis zum Zeitpunkt (24) das Rad (3) blockiert und das Drehgeschwindigkeitssignal (V₃) dementsprechend annähernd den Wert Null aufweist. Von dem Zeitpunkt (24) an erfolgt eine Anpassung des Bremsdruckes (P) gemäß den erfindungsgemäßen Merkmalen des ersten Regelungsprinzips, das während der Phase (32) durchgeführt wird und zum Zeitpunkt (28) endet.

Durch den gleichmäßigen Druckanstieg während der Phase (31) wird ebenfalls ein gleichmäßiger Anstieg des Giermomentes und somit ein beherrschbares Fahrverhalten des Fahrzeuges erreicht.

Während des ersten Regelungsprinzips wird der in der Übergangsphase (31) zunächst gleichmäßig erhöhte Bremsdruck (P) weiter erhöht. Hierbei kann ein Bremsdruckniveau erreicht werden, bei dem das auf dem höheren Reibwert befindliche Rad (2) eine Blockierneigung aufweist, sofern nicht eine erfindungsgemäße, kurzzeitige Bremsdruckverringerung erfolgt. Das auf dem geringeren Reibwert befindliche Rad (3) blockiert hierbei vollständig.

Nach Ablauf eines bestimmten Zeitraumes seit Beginn des ersten Regelungsprinzips, d. h. seit dem Zeitpunkt (24), wird der Bremsdruck (P) kurzzeitig verringert. Eine derartige Bremsdruckverringerung wird zu den Zeitpunkten (25, 27) vorgenommen und wird z. B. von einer Zeitüberwachungsfunktion ausgelöst. Die Zeitüberwachungsfunktion kann als ein Zähler mit fester Zähldauer ausgebildet sein, der jeweils nach Ablauf der Zähldauer eine Bremsdruckverringerung auslöst und nach Beendigung der Bremsdruckverringerung wieder erneut zu zählen beginnt. Ein geeigneter Wert für die Zähldauer ist 400 ms.

Die Dauer der kurzzeitigen Bremsdruckverringerung hängt von der Art der Bremsanlage, dem zuletzt eingestellten Bremsdruckniveau und weiteren fahrzeugspezifischen Größen, z. B. den Achslasten, ab und kann durch Versuche auf den jeweiligen Anwendungsfall abgestimmt werden. Ein geeigneter Wert liegt bei 100 ms. Die Abstimmung kann auch automatisch von dem Steuergerät vorgenommen werden, in dem aufgrund des zuletzt eingestellten Bremsdruckniveaus unter Berücksichtigung der zuvor genannten Einflußgrößen, die in dem Steuergerät dann als Parameter gespeichert worden sind, die Dauer der Bremsdruckverringerung berechnet wird.

Zum Zeitpunkt (26) erreicht die Bremskraft an dem auf dem höheren Reibwert befindlichen Rad (2) infolge der Erhöhung des Bremsdruckes (P) außerhalb der Zeitintervalle (37, 38, 39) einen Wert, der zu einer Blockierneigung an diesem Rad führt. Hierbei verringert sich das Drehgeschwindigkeitssignal (V₂) gemäß der Linie (46). Die Verringerung des Bremsdruckes zu dem Zeitpunkt (26) wird daher nicht aufgrund der Zeitüberwachungsfunktion ausgelöst, sondern von dem Verlauf des Drehgeschwindigkeitssignals (V₂).

Infolge der Bremskräfteverringerung zu den Zeitpunkten (25, 26, 27) läuft das auf dem geringeren Reibwert befindliche Rad (3) wieder an, wird jedoch durch die kurz darauf folgende, schnelle Bremsdruckerhöhung wieder zum Blockieren gebracht, sofern der dort verfügbare Reibwert sich nicht wesentlich erhöht hat. Dieses Verhalten ist in der Fig. 2 durch die Linien (50, 51) dargestellt.

Ab dem Zeitpunkt (29) erhöht sich der geringere Reibwert wieder auf den während der Phase (34) vorliegenden Wert, so daß in der Phase (36) wiederum eine annähernd homogene Reibwertverteilung mit den gleichen Reibwerten wie in der Phase (34) vorliegt. Durch die zum Zeitpunkt (27), d.h. nach dem Zeitpunkt (29), ausgelöste Bremskräfteverringerung läuft das während der Phase (35) auf dem geringeren Reibwert befindliche Rad (3) wieder an, was durch die Linie (49) dargestellt ist. Trotz der kurz darauf folgenden Bremskräfteerhöhung nach dem Zeitintervall (39) erhöht sich die Drehgeschwindigkeit des Rades (3) weiter und erreicht schließlich zumindest annähernd die Fahrzeuggeschwindigkeit. Dieses Verhalten wird bereits zu dem Zeitpunkt (28) erkannt, so daß daraufhin für die weitere Abbremsung in der Phase (33) wiederum gemäß der modifizierten Achsregelung der Bremsdruck (P) verändert wird. Es kann jedoch auch ein anderes Regelungsprinzip, bei dem Reifenschäden vermieden werden, angewandt werden, z.B. Select-Low.

Ebenfalls zu dem Zeitpunkt (28) wird der µ-split-Wert auf einen Anfangswert zurückgesetzt, nachdem er in den Phasen (31, 32) nicht weiter berücksichtigt wurde und daher auf seinem zuletzt vorliegenden Wert gehalten wurde.

Wie in der Fig. 2 außerdem zu erkennen ist, wird durch das erste Regelungsprinzip eine größere Fahrzeugverzögerung erzielt als durch die Anwendung der modifizierten Achsregelung zwischen den Zeitpunkten (22, 23) bei entsprechend großen Reibwertunterschieden an den beiden Fahrzeugseiten. Hierdurch kann auf derartigen Fahrbahnabschnitten ein kurzer Bremsweg erzielt werden.

Jeweils am Ende eines der Zeitintervalle (37, 38, 39), in denen der Bremsdruck (P) zunächst verringert wurde, wird der Bremsdruck dann schnell wieder auf ein höheres Niveau angehoben. Dieses Niveau entspricht dabei annähernd dem vor dem Zeitintervall vorliegenden Bremsdruckniveau, kann aber aus Sicherheitsgründen auch etwas niedriger gewählt werden.

Wenn das Ventil (8) als ein schaltbares Ventil mit den Schaltzuständen "Druck senken", "Druck halten" und "Druck erhöhen" ausgebildet ist, dann wird zur Wiederherstellung des Bremsdruckniveaus die Zeitdauer des Schaltzustandes "Druck senken" ermittelt und in dem Steuergerät (1) gespeichert und daraufhin unter Zuhilfenahme des gespeicherten Wertes die Dauer des Schaltzustandes "Druck erhöhen" festgelegt. Zur möglichst schnellen Wiederherstellung eines Bremsdruckniveaus, bei dem an dem auf dem höheren Reibwert befindlichen Rad der dort verfügbare Reibwert möglichst gut ausgenutzt wird, ist es außerdem möglich, die vor einem jeweiligen Zeitintervall der Bremsdruckverringerung vorgenommenen Schaltschritte zur Erhöhung des Bremsdruckes zu zählen und in Abhängigkeit von der so ermittelten Zahl die Bremskrafterhöhung nach einem Zeitintervall zu steuern. Auch eine Kombination dieser beiden Möglichkeiten ist vorteilhaft.

## Patentansprüche

1. Verfahren zur Abbremsung eines Fahrzeuges, bei dem an wenigstens einer Achse (14) die jeweiligen Bremskräfte an den Rädern (2, 3) dieser Achse (14) durch einen gemeinsamen Bremswert (P), insbesondere einen gemeinsamen Bremsdruck beeinflußbar sind, auf Fahrbahnen mit wechselnden Reibwerten mit folgenden Merkmalen:
a) es werden die Drehgeschwindigkeiten an wenigstens zwei sensierten Rädern (2, 3) der Achse (14), die an unterschiedlichen Seiten des Fahrzeuges angeordnet sind, als Drehgeschwindigkeitssignale (V₂, V₃) gemessen,
b) durch Auswertung des Verlaufes der Drehgeschwindigkeitssignale (V₂, V₃) wird geprüft, ob bei einer Abbremsung des Fahrzeuges eine Blockierneigung an den sensierten Rädern (2, 3) vorliegt,
c) wenn eine Blockierneigung an wenigstens einem der sensierten Räder (2, 3) festgestellt wurde, wird im Rahmen eines ersten Regelungsprinzips der Bremswert (P) derart beeinflußt, daß das auf dem geringeren Reibwert befindliche Rad wenigstens zeitweise blockiert,
**gekennzeichnet durch** folgende Merkmale:
d) während des ersten Regelungsprinzips werden **durch** Beeinflussung des Bremswertes (P) während bestimmter Zeitintervalle (37, 39) die Bremskräfte kurzzeitig soweit verringert, daß das auf dem geringeren Reibwert befindliche Rad (3) im Falle einer zwischenzeitlich eingetretenen Erhöhung des Reibwertes aus dem blockierten Zustand wieder anlaufen kann,
e) die Verringerung der Bremskräfte während der bestimmten Zeitintervalle (37, 39) wird von einer Zeitüberwachungsfunktion ausgelöst.

2. Verfahren nach Patentanspruch 1, **gekennzeichnet durch** folgende Merkmale:
a) neben dem ersten Regelungsprinzip ist ein zweites Regelungsprinzip vorgesehen,
b) im Rahmen des zweiten Regelungsprinzips wird der Bremswert (P) derart beeinflußt, daß bei möglichst hohen Bremskräften keines der sensierten Räder (2, 3) blockiert,
c) wenn das Drehgeschwindigkeitssignal (V₃) des auf dem geringeren Reibwert befindlichen Rades (3), insbesondere infolge der Bremskräfteverringerung, sich wenigstens annähernd bis zum Drehgeschwindigkeitssignal (V₂) des auf dem höheren Reibwert befindlichen Rades (2) erhöht, wird statt des ersten Regelungsprinzips das zweite Regelungsprinzip angewendet,
d) wenn das Drehgeschwindigkeitssignal (V₃) des auf dem geringeren Reibwert befindlichen Rades (3) sich nicht annähernd bis zum Drehgeschwindigkeitssignal (V₂) des auf dem höheren Reibwert befindlichen Rades (2) erhöht, wird mit dem ersten Regelungsprinzip fortgefahren.

3. Verfahren nach Patentanspruch 2, **gekennzeichnet durch** folgende Merkmale:
a) **durch** Auswertung des Verlaufes der Drehgeschwindigkeitssignale (V₂, V₃) wird bei einer Abbremsung des Fahrzeuges als µ-split-Wert ein Unterschied zwischen den Reibwerten, die zwischen der Fahrbahn und den sensierten Rädern (2, 3) vorliegen, bestimmt, sofern keines der sensierten Räder (2, 3) blockiert,
b) wenn eine Blockierneigung an den sensierten Rädern (2, 3) festgestellt wurde und der µ-split-Wert einen festgelegten Grenzwert nicht überschreitet, wird im Rahmen eines weiteren Regelungsprinzips der Bremswert (P) derart beeinflußt, daß bei möglichst hohen Bremskräften keines der sensierten Räder (2, 3) blockiert,
c) wenn bei vorliegender Blockierneigung der µsplit-Wert den festgelegten Grenzwert überschreitet, wird das erste Regelungsprinzip angewendet.

4. Verfahren nach Patentanspruch 2 oder 3, **dadurch gekennzeichnet, daß** das Prinzip der Select-Low-Regelung als zweites und/oder weiteres Regelungsprinzip angewendet wird.

5. Verfahren nach wenigstens einem der Patentansprüche 2 bis 4, **dadurch gekennzeichnet, daß** das Prinzip der modifizierten Achsregelung als zweites und/oder weiteres Regelungsprinzip angewendet wird.

6. Verfahren nach wenigstens einem der vorhergehenden Patentansprüche, **dadurch gekennzeichnet, daß** im Rahmen des ersten Regelungsprinzips außerhalb der Zeitintervalle (37, 38, 39) die Bremskräfte durch Beeinflussung des Bremswertes (P) soweit erhöht werden, daß das auf dem höheren Reibwert befindliche Rad (2) eine Blockierneigung aufweist.

7. Verfahren nach wenigstens einem der vorhergehenden Patentansprüche, **dadurch gekennzeichnet, daß** während des ersten Regelungsprinzips zur Erkennung der Blockierneigung wenigstens von dem auf dem höheren Reibwert befindlichen Rad (2) negative Beschleunigungssignale (-b) und/oder Schlupfsignale (λ) und von dem auf dem geringeren Reibwert befindlichen Rad (3) positive Beschleunigungssignale (+b) berücksichtigt werden.

8. Verfahren nach wenigstens einem der vorhergehenden Patentansprüche, **dadurch gekennzeichnet, daß** während des ersten Regelungsprinzips eine Blockierneigung erkannt wird, wenn der'Mittelwert der Drehgeschwindigkeitssignale (V₂, V₃) einen Schwellenwert unterschreitet.

9. Verfahren nach Patentanspruch 8, **dadurch gekennzeichnet, daß** der Schwellenwert bei einer sehr hohen oder einer sehr geringen Fahrzeugverzögerung verringert wird.

10. Verfahren nach wenigstens einem der vorhergehenden Patentansprüche, **dadurch gekennzeichnet, daß** beim Übergang zu dem ersten Regelungsprinzip der Bremswert (P) nach einer Zeitfunktion stetig oder feinstufig verändert wird.

11. Verfahren nach wenigstens einem der vorhergehenden Patentansprüche, **dadurch gekennzeichnet, daß** der Übergang zu dem ersten Regelungsprinzip nur bei solchen Fahrzeugverzögerungen erfolgt, die unterhalb eines festgelegten Grenzwertes liegen.

12. Verfahren nach wenigstens einem der vorhergehenden Patentansprüche, **dadurch gekennzeichnet, daß** während des ersten Regelungsprinzips nach einem Zeitintervall, in dem die Bremskräfte durch Beeinflussung des Bremswertes (P) kurzzeitig verringert wurden, der vor dem Zeitintervall vorliegende Bremswert (P) wenigstens annähernd wieder eingestellt wird.

13. Verfahren nach wenigstens einem der vorhergehenden Patentansprüche, **dadurch gekennzeichnet, daß** im Rahmen des ersten Regelungsprinzips als Regelschwingungen Änderungen des Drehgeschwindigkeitssignales (V₂) des auf dem höheren Reibwert befindlichen Rades (2) auftreten und die infolge dieser Änderungen des Drehgeschwindigkeitssignales (V₂) auftretenden Phasen der Bremskräfteverringerung als Zeitintervalle (38) des ersten Regelungsprinzips verwendet werden.

## Claims

1. Method for braking a vehicle, in which on at least one axle (14) the respective braking forces at the wheels (2, 3) of that axle (14) are influencable by a common braking value (P), especially a common braking pressure, on road surfaces having changing coefficients of friction, the method having the following features:
a) the rotational speeds at at least two sensed wheels (2, 3) of the axle (14) that are arranged on different sides of the vehicle are measured as rotational speed signals (V₂, V3);
b) by evaluating the characteristic of the rotational speed signals (V₂, V₃), a check is made as to whether during braking of the vehicle the sensed wheels (2, 3) show a tendency to lock;
c) when a locking tendency at at least one of the sensed wheels (2, 3) has been established, within the limits of a first control principle the braking value (P) is influenced in such a way that the wheel located on the lower coefficient of friction locks at least intermittently;
**characterised in that**
d) during the first control principle, by influencing the braking value (P) during specific time intervals (37,39), the braking forces are reduced briefly to such an extent that the wheel (3) located on the lower coefficient of friction can start to run again from the locked state in the case of an interim increase in the coefficient of friction;
e) the reduction in braking forces during the specific time intervals (37, 39) is triggered by a time monitoring function.

2. Method according to claim 1, **characterised by** the following features:
a) in addition to the first control principle a second control principle is provided,
b) within the limits of the second control principle the braking value (P) is influenced in such a way that at maximum braking forces none of the sensed wheels (2, 3) locks,
c) when the rotational speed signal (V₃) of the wheel (3) located on the lower coefficient of friction, especially as a consequence of a reduction in braking force, increases at least approximately to the rotational speed signal (V₂) of the wheel (2) located on the higher coefficient of friction, instead of the first control principle the second control principle is applied,
d) when the rotational speed signal (V₃) of the wheel (3) located on the lower coefficient of friction does not increase at least approximately to the rotational speed signal (V₂) of the wheel (2) located on the higher coefficient of friction, control with the first control principle is continued.

3. Method according to claim 2, **characterised by** the following features:
a) by evaluating the characteristic of the rotational speed signals (V₂, V₃), on braking of the vehicle a difference between the coefficients of friction that exist between the road surface and the sensed wheels (2, 3) is determined as µ-split value, provided that none of the sensed wheels (2, 3) locks;
b) when a locking tendency at the sensed wheels (2, 3) has been established and the µ-split value does not exceed a fixed limit value, within the limits of a further control principle the braking value (P) is influenced in such a way that at maximum braking forces none of the sensed wheels (2, 3) locks;
c) when a locking tendency is established and the µ-split value exceeds the fixed limit value, the first control principle is applied.

4. Method according to claim 2 or 3, **characterised in that** the principle of the select-low control is applied as second and/or further control principle.

5. Method according to at least one of claims 2 to 4, **characterised in that** the principle of modified axle control is applied as second and/or further control principle.

6. Method according to at least one of the preceding claims, **characterised in that** within the limits of the first control principle, outside the time intervals (37, 38, 39) the braking forces are increased by influencing the braking value (P) to such an extent that the wheel (2) located on the higher coefficient of friction shows a tendency to lock.

7. Method according to at least one of the preceding claims, **characterised in that** during the first control principle, to recognise the tendency to lock, negative acceleration signals (-b) and/or slippage signals (λ) at least from the wheel (2) located on the higher coefficient of friction and positive acceleration signals (+b) from the wheel (3) located on the lower coefficient of friction are taken into account.

8. Method according to at least one of the preceding claims, **characterised in that** during the first control principle a tendency to lock is recognised when the mean value of the rotational speed signals (V₂, V₃), falls below a threshold value.

9. Method according to claim 8, **characterised in that** the threshold value is reduced at a very high or a very low vehicle deceleration.

10. Method according to at least one of the preceding claims, **characterised in that** during the transition to the first control principle the braking pressure (P) is changed continuously or in fine steps according to a time function.

11. Method according to at least one of the preceding claims, **characterised in that** the transition to the first control principle is effected only in the case of those vehicle decelerations lying below a fixed limit value.

12. Method according to at least one of the preceding claims, **characterised in that**, during the first control principle after a time interval in which the braking forces were briefly reduced by influencing the braking value (P), the braking value (P) existing before the time interval is at least approximately reset.

13. Method according to at least one of the preceding claims, **characterised in that** within the limits of the first control principle changes in the rotational speed signal (V₂) of the wheel (2) located on the higher coefficient of friction occur as control swings and the phases of the braking force reduction occurring as a result of these changes in the rotational speed signal (V₂) are used as time intervals (38) of the first control principle.

## Revendications

1. Procédé de freinage d'un véhicule, dans lequel les forces de freinage respectives sur les roues (2, 3) d'au moins un essieu (14) peuvent être influencées par une valeur de freinage commune (P), en particulier une pression de freinage commune, et ceci sur des chaussées à coefficients de friction variables, présentant les éléments suivants :
a) on mesure sous forme de signaux de vitesse de rotation (V₂, V₃) les vitesses de rotation sur au moins deux roues concernées (2, 3) de l'essieu (14), qui sont agencées sur des côtés différents du véhicule,
b) par évaluation de l'évolution des signaux de vitesse de rotation (V₂, V₃) on vérifie si une tendance au blocage se présente sur les roues concernées par la mesure (2, 3) lors d'un freinage du véhicule,
c) lorsque l'on a constaté une tendance au blocage sur l'une au moins des roues concernées (2, 3), la valeur de freinage (P) est influencée dans le cadre d'un premier principe de régulation de telle sorte que la roue située au niveau du coefficient de friction plus faible se bloque au moins temporairement,
**caractérisé par** les éléments suivants :
d) pendant le premier principe de régulation, on réduit brièvement les forces de freinage en influençant la valeur de freinage (P) pendant des intervalles temporels déterminés (37, 39), de telle sorte que la roue (3) située au niveau du coefficient de friction plus faible peut être relancée à partir de l'état bloqué dans le cas d'une augmentation du coefficient de friction apparue entre-temps,
e) la réduction des forces de freinage pendant les intervalles temporels déterminés (37, 38) est déclenchée par une fonction de surveillance temporelle.

2. Procédé selon la revendication 1, **caractérisé par** les éléments suivants :
a) on prévoit, outre le premier principe de régulation, un deuxième principe de régulation,
b) dans le cadre du deuxième principe de régulation, on influence la valeur de freinage (P) de telle sorte qu'aucune des roues concernées (2, 3) ne se bloque à des forces de freinage aussi élevées que possible,
c) lorsque le signal de vitesse de rotation (V₃) de la roue (3) située au niveau du coefficient de friction plus faible, en particulier en raison de la réduction des forces de freinage, augmente pour passer au moins approximativement au signal de vitesse de rotation (V₂) de la roue (2) située au niveau du coefficient de friction plus haut, on applique le deuxième principe de régulation à la place du premier principe de régulation,
d) lorsque le signal de vitesse de rotation (V₃) de la roue (3) située au niveau du coefficient de friction plus faible n'augmente pas pour passer approximativement au signal de vitesse de rotation (V₂) de la roue (2) située au niveau du coefficient de friction plus haut, on continue avec le premier principe de régulation.

3. Procédé selon la revendication 2, **caractérisé par** les éléments suivants :
a) par évaluation de l'évolution des signaux de vitesse de rotation (V₂, V₃), on détermine sous forme de valeur "µ-split" (valeur scindée), lors d'un freinage du véhicule, une différence entre les coefficients de friction qui se présentent entre la chaussée et les roues concernées (2, 3), dans la mesure où aucune des roues concernées (2, 3) ne se bloque,
b) lorsque l'on a constaté une tendance au blocage sur les roues concernées (2, 3), et que la valeur µ-split ne dépasse pas une valeur limite prédéterminée, on influence la valeur de freinage (P) dans le cadre d'un autre principe de régulation de telle sorte qu'aucune des roues concernées (2, 3) ne se bloque à des forces de freinage aussi élevées que possible,
c) lorsque la valeur µ-split dépasse la valeur limite prédéterminée lors de la présence d'une tendance au blocage, on applique le premier principe de régulation.

4. Procédé selon l'une ou l'autre des revendications 2 et 3, **caractérisé en ce que** l'on applique le principe de la régulation "select-low" (sélection basse) comme deuxième et/ou comme autre principe de régulation.

5. Procédé selon l'une au moins des revendications 2 à 4, **caractérisé en ce que** l'on applique le principe de la régulation d'essieu modifiée comme deuxième et/ou comme autre principe de régulation.

6. Procédé selon l'une au moins des revendications précédentes, **caractérisé en ce que** dans le cadre du premier principe de régulation, à l'extérieur des intervalles temporels (37, 38, 39), on augmente les forces de freinage en influençant la valeur de freinage (P) aussi loin que la roue (2) située au niveau du coefficient de friction plus élevé présente une tendance au blocage.

7. Procédé selon l'une au moins des revendications précédentes, **caractérisé en ce que** pendant le premier principe de régulation, pour reconnaître la tendance au blocage, on prend en compte au moins des signaux d'accélération négatifs (-b) et/ou des signaux de glissement (λ) de la roue (2) située au niveau du coefficient de friction plus élevé, et des signaux d'accélération positifs (+b) de la roue (3) située au niveau du coefficient de friction plus faible.

8. Procédé selon l'une au moins des revendications précédentes, **caractérisé en ce que** pendant le premier principe de régulation on reconnaît une tendance au blocage lorsque la valeur moyenne des signaux de vitesse de rotation (V₂, V₃) passe au-dessous d'une valeur seuil.

9. Procédé selon la revendication 8, **caractérisé en ce que** la valeur seuil est réduite lors d'une décélération très élevée ou très faible du véhicule.

10. Procédé selon l'une au moins des revendications précédentes, **caractérisé en ce que** lors du passage vers le premier principe de régulation, la valeur de freinage (P) est modifiée en continu ou par étapes fines selon une fonction temporelle.

11. Procédé selon l'une au moins des revendications précédentes, **caractérisé en ce que** le passage vers le premier principe de régulation s'effectue uniquement lors de telles décélérations du véhicule qui sont inférieures à une valeur limite prédéterminée.

12. Procédé selon l'une au moins des revendications précédentes, **caractérisé en ce que** pendant le premier principe de régulation, après un intervalle temporel dans lequel les forces de freinage ont été brièvement réduites par influence de la valeur de freinage (P), la valeur de freinage (P) qui se présente avant l'intervalle temporel est du moins approximativement rétablie.

13. Procédé selon l'une au moins des revendications précédentes, **caractérisé en ce que** dans le cadre du premier principe de régulation, des modifications du signal de vitesse de rotation (V₂) de la roue (2) située au niveau du coefficient de friction plus élevé apparaissent comme oscillations de régulation, et les phases de la réduction des forces de freinage, apparaissant en raison de ces modifications du signal de vitesse de rotation (V₂), sont utilisées à titre d'intervalles temporels (38) du premier principe de régulation.
